# EUROPÄISCHE PATENTSCHRIFT

(11) **EP 2 819 613 B1**
(45) Veröffentlichungstag und Bekanntmachung des Hinweises auf die Patenterteilung: **05.01.2022**
(21) Anmeldenummer: 13708746.6
(22) Anmeldetag: 28.02.2013
(51) Int. Cl.: A61C 13/00

(54) **ROHLING FÜR DIE HERSTELLUNG VON ZAHNERSATZ**
BLANK FOR PRODUCING A DENTAL PROSTHESIS
ÉBAUCHE POUR LA FABRICATION D'UNE PROTHÈSE DENTAIRE

(30) Priorität: 29.02.2012 DE 102012203154
(43) Veröffentlichungstag der Anmeldung: 07.01.2015
(73) Patentinhaber: Ivoclar Vivadent AG, 9494 Schaan (LI)
(72) Erfinder: CRAMER VON CLAUSBRUCH, Sascha, 75417 Mühlacker (DE)
(74) Vertreter: Uexküll & Stolberg
(86) Internationale Anmeldenummer: PCT/EP2013/054049
(87) Internationale Veröffentlichungsnummer: WO 2013/127931

(56) Entgegenhaltungen:
- EP-A1- 1 992 302
- EP-A2- 2 384 718
- WO-A1-2011/029615
- DE-A1- 10 150 647
- DE-A1-102007 013 065
- DE-A1-102007 013 675
- DE-U1-202010 009 686
- US-A1- 2004 241 614
- US-A1- 2006 172 263
- US-A1- 2009 181 346

## Beschreibung

Die Erfindung betrifft einen Rohling für die Herstellung von dentalen Formteilen (Zahnersatz), wie Kronen, Brücken, Verblendungen, Abutments u.a. sowie ein Verfahren zur Herstellung dieses Rohlings und ein Verfahren zur Herstellung von Zahnersatz.

Zahnersatz aus keramischen Materialien hat in den letzten Jahren eine immer größere Bedeutung erlangt. Dabei werden diese Materialien nicht nur, wie es bereits seit längerem bekannt ist, zur Verblendung von Gerüsten aus Metall eingesetzt, sondern der gesamte Zahnersatz, beispielsweise bestehend aus Gerüst und Verblendung, wird aus Keramik gefertigt. Man gelangt auf diese Weise zu vollkeramischem Zahnersatz, beispielsweise zu Vollkeramikkronen und Vollkeramikbrücken. Als keramische Materialien hervorzuheben sind dabei insbesondere die sogenannten Oxidkeramiken, und von diesen wiederum das Zirkoniumdioxid (ZrO₂).

Bei vollkeramischem Zahnersatz werden in der Regel die Gerüste, aber auch andere dentale Formteile wie Verblendungen, Abutments (Implantataufbauteile) oder sogar ganze Zähne, aus einem Keramikblock, dem sogenannten Rohling oder Blank, mechanisch herausgearbeitet. Insbesondere erfolgt dies durch Fräsen und/oder durch Bohren, Schneiden, Sägen, Schleifen und dergleichen.

In diesem Zusammenhang ist u.a. von Bedeutung, innerhalb welcher Zeiten die entsprechenden dentalen Formteile aus dem Keramikblock herausgearbeitet werden können. Um vergleichsweise kurze Bearbeitungszeiten bei einem akzeptablen Werkzeugverschleiß zu erreichen, wird deshalb in der Regel ungesintertes (nicht gesintertes) oder angesintertes (nicht end- bzw. nicht dichtgesintertes) Keramikmaterial für die genannten Blöcke verwendet. Der beim notwendigen Dichtsintern der dentalen Formteile zwangsläufig auftretende Sinterschwund muss deshalb bereits vorab bei der Dimensionierung der dentalen Formteile berücksichtigt werden.

Dokument DE202010009686U offenbart einen scheibenförmigen Fräsrohling, welcher aus einer Matrix aus Kunststoff besteht, der Füllbereiche für das zu fräsende Material aufweist, deren Form den zu fräsenden Zahnteilen angepasst ist, wobei die Füllbereiche mit getrocknetem Dentalmetallschlicker gefüllt sind und die Wände der Füllbereiche durch Stege unter Auslassung von Leerbereichen verbunden sind.

Dokument DE102007013065 offenbart einen scheibenförmigen Rohling in dem Prothetikteile ausgearbeitet wurden. Hierzu werden Halte- bzw. Verbindungsstege vorgesehen, über welche die Prothetikteile entweder mit dem verbleibenden Rohling oder mit benachbarten Prothetikteilen verbunden sind.

Die Erfindung stellt sich deshalb zum einen die Aufgabe, die Bearbeitungszeiten bei der Herstellung der dentalen Formteile aus Keramikblöcken weiter zu verkürzen. Zum anderen sollen sich die daraus resultierenden Vorteile auch auf die Bearbeitung anderer Materialien in der Dentaltechnik übertragen lassen.

Diese Aufgabe wird gelöst durch den Rohling mit den Merkmalen des Anspruchs 1. Bevorzugte Ausführungen dieses Rohlings finden sich in den Unteransprüchen 2 bis 13, die von Anspruch 1 abhängig sind. Gegenstand der Erfindung sind auch das Verfahren zur Herstellung des erfindunsggemäßen Rohlings nach den Ansprüchen 14 und 15, das Verfahren zur Herstellung von Zahnersatz nach den Ansprüchen 16 bis 20 sowie die Verwendung des Rohlings nach Anspruch 21.

Der Wortlaut sämtlicher Ansprüche wird hiermit durch Bezugnahme zum Inhalt dieser Beschreibung gemacht.

Unter "Rohling" soll dabei ein Körper verstanden werden, aus dem die entsprechenden dentalen Formteile herausgearbeitet werden können, vorzugsweise durch eine mechanische Bearbeitung wie Fräsen, Schneiden, Sägen, Bohren, Schleifen und dergleichen. Solche Rohlinge werden häufig auch als "Blanks" bezeichnet. Erfindungsgemäß handelt es sich um scheibenförmige Rohlinge. Dabei ist eine Scheibe definitionsgemäß ein Körper, insbesondere Zylinder, dessen Dicke geringer, insbesondere wesentlich geringer, ist als sein Radius.

Die "Vorformlinge", die im erfindungsgemäßen Rohling ausgebildet sind, werden im englischen häufig als "preforms" bezeichnet. Es handelt sich dabei um dreidimensionale Körper, die bezüglich ihrer Abmessungen und/oder ihrer Form/Gestalt an die Abmessungen und/oder die Form/Gestalt des dentalen Formteils, das hergestellt werden soll, angenähert oder angepasst sind. Im Ergebnis bedeutet dies, dass aufgrund der mindestens teilweise angepassten oder vorweggenommenen Abmessungen und/oder Formen der Vorformlinge die Ausarbeitung des dentalen Formteils aus dem Rohling erleichtert wird.

Dabei können die Vorformlinge sich den Abmessungen und/oder der Form des dentalen Formteils nur grob annähern oder diese Parameter zumindest teilweise schon vorwegnehmen. Dies wird später im Zusammenhang mit dem Beispiel und den Figuren noch näher erläutert.

Es ist bei der Erfindung bevorzugt, wenn die Vorformlinge im Rohling durch mechanische Bearbeitung erhalten wurden. Dies erfolgt vorzugsweise durch Schneiden, Sägen, Schleifen, Bohren und/oder insbesondere durch Fräsen.

Grundsätzlich können die unterschiedlichsten dentalen Formteile als Vorformlinge (preforms) im erfindungsgemäßen Rohling vorgesehen sein. Es kann sich also beispielsweise um Inlays, Onlays, Verblendungen, Teilverblendungen, Implantatteile, wie Abutments, oder sogar um Brücken oder Brückenglieder handeln. Vorzugsweise sind die im Rohling vorgesehenen Vorformlinge aber zur Ausarbeitung von (Einzel-) Kronen aus dem Rohling vorgesehen. Hier kann es sich um die unterschiedlichsten Kronen, wie solche für Schneidezähne, Eckzähne oder Backenzähne, handeln.

In dem erfindungsgemäßen Rohling ist eine Mehrzahl von Vorformlingen vorhanden. Daher kann der Rohling für die Herstellung von dentalen Formteilen platz- und volumenmäßig optimal ausgenutzt werden. Hierbei ist es bevorzugt, wenn mehr als fünf, insbesondere mehr als zehn Vorformlinge, im erfindungsgemäßen Rohling vorgesehen sind.

Die Vorformlinge sind jeweils durch nur einen Steg mit dem Rest des Rohlings verbunden. Dieser Steg wird durchtrennt, wenn das dentale Formteil aus seinem zugehörigen Vorformling herausgearbeitet ist.

Der Steg selbst wird bei der Herstellung des entsprechenden Vorformlings, beispielsweise durch mechanische Bearbeitung, ausgebildet, so dass eine stabile, aber gleichzeitig einfach zu trennende Verbindung zwischen dem Vorformling und dem Rest des Rohlings verbleibt. Die Querschnittsfläche des Stegs kann beliebig ausgestaltet sein, wobei in der Regel eine kreisförmige Querschnittsfläche bevorzugt ist.

Der erfindungsgemäße Rohling besitzt die Form einer im wesentlichen kreisrunden Scheibe mit einem Durchmesser von mehr als 20 mm. Dabei sind Durchmesser von mehr als 50 mm weiter bevorzugt. Auch Durchmesser von mehr als 80 mm, insbesondere von 100 mm, sind mit Vorteil möglich.

Bei Scheiben, die in der Form des Durchmessers von der Kreisform abweichen, soll unter Durchmesser der größte Abstand zwischen zwei Punkten verstanden werden, die auf dem Außenumfang der Scheibe liegen.

Bei den erfindungsgemäßen Rohlingen beträgt die Dicke der Scheibe insbesondere mehr als 5 mm. Dabei sind Dicken der Scheiben zwischen 5 mm und 30 mm noch weiter bevorzugt.

Der erfindungsgemäße Rohling weist ferner am Außenumfang mindestens ein Haltemittel zum Einspannen des Rohlings bei seiner Bearbeitung zu einem dentalen Formteil auf. Dieses Haltemittel dient somit zur (in der Regel reversiblen) Halterung oder Befestigung des Rohlings in einer entsprechenden Bearbeitungsmaschine, beispielsweise einer Fräsmaschine. Dabei ist das mindestens eine Haltemittel direkt am Rohling angeformt, beispielsweise auch durch eine Befestigung, wie eine Verklebung, oder ausgeformt, wie beispielsweise durch mindestens eine, mindestens teilweise am Außenumfang des Rohlings umlaufende Ausnehmung, insbesondere Nut.

Der erfindungsgemäße Rohling kann grundsätzlich aus allen Materialien bestehen bzw. gefertigt sein, die in der Dentaltechnik für solche Rohlinge (blanks) Verwendung finden. Bei allen diesen Materialien werden die Bearbeitungszeiten durch die im Rohling vorgesehenen Vorformlinge verkürzt. Dabei können auch Materialien Verwendung finden, deren Einsatz aufgrund der langen Bearbeitungszeiten aus einem Vollmaterial (ohne Vorformlinge) bisher nicht möglich oder nicht wirtschaftlich war.

Mit Vorteil ist der Rohling aus einem Kunststoffmaterial gefertigt, wie es für solche Rohlinge üblicherweise zum Einsatz kommt. Es kann sich dabei beispielsweise um synthetische Wachse oder auch um Acrylpolmere, beispielsweise auf Basis von Methylmethacrylat, handeln. Vorzugsweise besteht der Rohling in solchen Fällen aus PMMA (Polymethylmethacrylat) oder aus PU (Polyurethan).

In einer bevorzugten Ausführungsform ist das Kunststoffmaterial ein Kompositmaterial, das zumindest teilweise polymerisiertes organisches Bindemittel und Füllstoff enthält. Es ist bevorzugt, dass das Kompositmaterial vollständig polymerisiertes organisches Bindemittel enthält. Durch den Grad der Polymerisation kann insbesondere die Härte des Kompositmaterials eingestellt werden. Es ist möglich, den Rohling aus einem noch nicht vollständig polymerisierten Kompositmaterial zu fertigen und in einem späteren Schritt, insbesondere bei der Herstellung eines dentalen Formteils, das Kompositmaterial weiter zu polymerisieren.

Als polymerisierbares organisches Bindemittel eignen sich besonders mono- oder multifunktionelle (Meth)acrylate oder deren Mischung. Unter monofunktionellen (Meth)acrylaten werden Verbindungen mit einer, unter mehrfach funktionellen (Meth)acrylaten Verbindungen mit zwei oder mehr, vorzugsweise 2 bis 3 polymerisierbaren Gruppen verstanden.

Bevorzugte Beispiele sind Methyl-, Ethyl-, Hydroxyethyl-, Butyl-, Benzyl-, Tetrahydrofurfuryl- oder lsobornyl(meth)acrylat, Bisphenol-A-di(meth)acrylat, Bis-GMA (ein Additionsprodukt aus Methacrylsäure und Bisphenol-A-diglycidylether), UDMA (ein Additionsprodukt aus 2-Hydroxyethylmethacrylat und 2,2,4-Trimethylhexamethylendiisocyanat), Di-, Tri- oder Tetraethylenglycoldi(meth)acrylat, Trimethylolpropantri(meth)acrylat, Pentaerythrittetra(meth)acrylat, sowie Glycerindimethacrylat, 1,4-Butandioldi(meth)acrylat, 1,10-Decandioldi(meth)acrylat oder 1,12-Dodecandioldi(meth)acrylat. Organische Bindemittel, die mindestens ein radikalisch polymerisierbares Monomer mit 2 oder mehr, vorzugsweise 2 bis 3 radikalisch polymerisierbaren Gruppen enthalten, sind besonders bevorzugt.

Als Füllstoffe eignen sich vorzugsweise organische oder anorganische partikuläre Füllstoffe. Bevorzugte anorganische partikulären Füllstoffe sind nanopartikuläre Füllstoffe auf der Basis von Oxiden, wie pyrogener Kieselsäure oder Fällungskieselsäure, ZrO₂ und TiO₂ oder Mischoxiden von SiO₂, ZrO₂ und/oder TiO₂ mit einem mittleren Partikeldurchmesser von 10 bis 200 nm, Minifüllstoffe, wie Quarz-, Glaskeramik- oder Glaspulver mit einer durchschnittlichen Teilchengröße von 0,2 bis 5 µm sowie röntgenopake Füllstoffe, wie Ytterbiumtrifluorid, nanopartikuläres Tantal(V)-oxid oder Bariumsulfat. Darüber hinaus können auch faserförmige Füllstoffe, wie Nanofasern, Glasfasern, Polyamid- oder Kohlenstoff-Fasern, eingesetzt werden.

Das Kompositmaterial enthält insbesondere mindestens 50 Gew.-% und bevorzugt 50 bis 90 Gew.-% Füllstoff.

Auch Metalle und Metalllegierungen sind als Materialien für den erfindungsgemäßen Rohling mit Vorteil einsetzbar. Auch hier handelt es sich um die üblichen metallischen Materialien, die in der Dentaltechnik für solche Anwendungen zum Einsatz kommen. Hervorzuheben sind hier als Materialien (Rein-)Titan, Titanlegierungen, beispielsweise mit Zusatz von Aluminium und Vanadium, und Cobalt-Chrom (CoCr-)Legierungen.

Weiter ist es möglich, dass der erfindungsgemäße Rohling aus Glas oder Glaskeramik gefertigt ist. Dabei ist unter "Glas" bekanntlich ein amorpher, nicht kristalliner Feststoff zu verstehen. Es handelt sich um eine amorphe Substanz, die thermodynamisch als gefrorene, unterkühlte Flüssigkeit bezeichnet werden kann. Hier können erfindungsgemäß beispielsweise oxidische Gläser, insbesondere Borosilikatgläser, Alumosilikatgläser oder Lithiumsilikatgläser, zum Einsatz kommen.

Glaskeramiken sind Werkstoffe, die innerhalb einer Glasmatrix auch kristalline Anteile aufweisen. Auch solche Materialien kommen in der Dentaltechnik in großem Umfang zum Einsatz.

In einer bevorzugten Ausführungsform besteht der erfindungsgemäße Rohling aus einer Lithiumsilikat-Glaskeramik und insbesondere aus einer Lithiummetasilikat- oder einer Lithiumdisillikat-Glaskeramik.

Keramische Materialien, aus denen der erfindungsgemäße Rohling ebenfalls mit Vorteil gefertigt sein kann, sind polykristalline Materialien, von denen wiederum die Oxidkeramiken und die Silikatkeramiken hervorzuheben sind. Dabei sind die Oxidkeramiken als Ausgangsmaterial für die erfindungsgemäßen Rohlinge besonders geeignet.

Unter "Oxidkeramik" bzw. "Oxidkeramiken" werden, in Abgrenzung zu den "Silikatkeramiken", Dentalkeramiken bestimmter Zusammensetzung verstanden. Oxidkeramiken basieren auf einfachen Oxiden von Metallen, wobei die Hauptvertreter dieser Werkstoffgruppe die Oxidkeramiken auf Basis von Aluminiumoxid (Al₂O₃), Zirkoniumdioxid (ZrO₂), Titandioxid (TiO₂) und Magnesiumoxid (MgO) sind. Bei allen Oxidkeramiken dominiert die kristalline Phase ganz überwiegend, so dass der amorphe Glasphasenanteil bei diesen Werkstoffen vernachlässigbar gering ist. Wichtigste Vertreter sind dabei die Oxidkeramiken auf Basis von Zirkoniumdioxid.

Dabei ist von Vorteil, wenn das Zirkoniumdioxid durch Zugabe anderer Metalloxide modifiziert ist. Durch die Zugabe solcher Metalloxide wird die Hochtemperaturmodifikation des reinen Zirkoniumdioxid auch bei tieferen Temperaturen stabilisiert. Geeignete Metalloxide sind beispielsweise Calciumoxid (CaO), Magnesiumoxid (MgO), Ceroxid (CeO, Ce₂O₃) oder insbesondere Yttriumoxid (Y₂O₃). Man unterscheidet dabei zwischen vollstabilisiertem Zirkoniumdioxid (FSZ - fully stabilized zirconia) und teilstabilisiertem Zirkoniumdioxid (PSZ - partly stabilized zirconia). Besonders hervorzuheben ist das teilstabilisierte, polykristalline, tetragonale Zirkoniumdioxid (TZP - tetragonal zirconia polycrystal). Y-TZP bedeutet dabei die entsprechende Stabilisierung auf Yttriumoxid-Basis.

Eine für die Erfindung besonders geeignete Zirkoniumdioxid-Keramik ist 3Y-TZB, das 3 Mol% Yttriumoxid enthält. Dabei sind Hafniumoxid (HfO₂) und Aluminiumoxid (Al₂O₃) als natürliche Begleiter von Zirkoniumdioxid (ZrO₂) ebenfalls in geringen Mengen enthalten, beispielsweise Hafniumoxid ≤ 5 % und Aluminiumoxid ≤ 0,5 %.

Weitere bevorzugte Zirkoniumdioxid-Keramiken, die erfindungsgemäß einsetzbar sind, gehen aus der folgenden Tabelle hervor.

| **Name des Inhaltsstoffes** | **Chemisches Zeichen** | **Anteil in %** |
|---|---|---|
| Yttriumoxid | Y₂O₃ | > 4,5 bis < 6,0 |
| Hafniumoxid | HfO₂ | ≤ 5,0 |
| Aluminiumoxid | Al₂O₃ | ≤ 0,5 |
| Andere Oxide | | ≤ 0,5 |
| Zirkonoxid + Hafniumoxid + Yttriumoxid | ZrO₂, HfO₂, Y₂O₃ | ≥ 99,0 |

Ebenfalls geeignet als Oxidkeramiken für die vorliegende Erfindung sind Mischoxidkeramiken basierend auf den Hauptkomponenten Aluminiumoxid (Al₂O₃) und Zirkoniumdioxid (ZrO₂). Typischerweise handelt es sich dabei um Mischoxidkeramiken mit 80 % bis 90 % Aluminiumoxid, Rest Zirkoniumdioxid oder mit ca. 80 % Zirkoniumdioxid, Rest Aluminiumoxid. Werkstoffe mit der Hauptkomponente Aluminiumoxid werden als ZTA (zirconia toughened alumina) bzw. ATZ (alumina toughened zirconia) bezeichnet.

Bei dem keramischen Material, das für die Fertigung des erfindungsgemäßen Rohlings verwendet wird, kann es sich zum einen um ein ungesintertes, d.h. nicht gesintertes, Keramikmaterial oder um eine (nur) angesintertes, d.h. nicht endgesintertes oder nicht dichtgesintertes, Keramikmaterial handeln.

Derartige Materialien sind noch mehr oder weniger porös, jedoch leichter mechanisch bearbeitbar als endgesinterte (dichtgesinterte) keramische Materialien.

Zum anderen können die erfindungsgemäßen Rohlinge auch aus endgesintertem, d.h. dichtgesintertem, keramischem Material bestehen, das nur noch eine geringe Restporosität aufweist. Solche Materialien sind in der Regel härter und somit schwieriger mechanisch bearbeitbar. Durch die Maßnahme, im Rohling Vorformlinge vorzusehen, werden jedoch auch hier die Bearbeitungszeiten bei der Herstellung von dentalen Formteilen signifikant verkürzt.

Die zuletzt gemachten Ausführungen bezüglich ungesintertem, angesintertem und endgesintertem Material gelten natürlich in entsprechender Weise auch für Glas und Glaskeramik als Materialien für den Rohling. Auch hier kann die Zusammensetzung und Porosität der Materialien durch mindestens einen Sinterschritt verändert werden, so dass auch hier unterschiedlich poröse und damit harte Materialien als Ausgangsmaterialien für den erfindungsgemäßen Rohling zum Einsatz kommen können.

Abschließend sei noch erwähnt, dass der erfindungsgemäße Rohling auch mit Hilfe von Färbezusätzen eingefärbt sein kann. Entsprechende Färbetechniken sind dem Fachmann bekannt. In der Regel erfolgt die Einfärbung der Materialien, beispielsweise der verwendeten Oxidkeramiken, mit Metallatomen oder Metallionen, wobei insbesondere Metallatome oder Metallionen der Seltenerdenelemente oder der Nebengruppenelemente des Periodensystems der Elemente Verwendung finden.

Dabei kann der gesamte Rohling einheitlich in einer Farbe bzw. in einem Farbton eingefärbt sein. Es ist jedoch auch möglich, unterschiedliche Farbschichten vorzusehen oder den Rohling mit einem Farbgradienten einzufärben, wobei sich dann die Farbe ausgehend von einer Ausgangsfarbe hin zu einer Endfarbe ohne Farbsprünge ändert.

Das erfindungsgemäße Verfahren zur Herstellung des erfindungsgemäßen Rohlings ist dadurch gekennzeichnet, dass im Rohling eine Mehrzahl von Vorformlingen (preforms) dentaler Formteile ausgebildet werden, wobei diese Vorformlinge dann für die Herstellung dieser Formteile zur Verfügung stehen.

In einer bevorzugten Ausführungsform ist das erfindungsgemäße Verfahren dadurch gekennzeichnet, der Rohling durch mechanische Bearbeitung des ausgewählten Werkstoffs und insbesondere durch Spritzgießen oder Extrusion des ausgewählten Werkstoffs hergestellt wird. Durch Spritzgiessen und Extrusion können insbesondere auch Rohlinge aus keramischen Materialien erzeugt werden.

Die Extrusion erlaubt die Herstellung von Strängen von Rohlingen mit einer einheitlichen Größe und Anordnung der Vorformlinge. Durch Schneiden dieser Stränge auf die gewünschte Dicke wird dann eine Vielzahle von Rohlingen in Form von Scheiben in sehr wirtschaftlicher Weise erzeugt. Der bei einer anschließenden thermischen Behandlung, z.B. einem Vorsintern, auftretende Sinterschwund wird dabei entsprechend berücksichtigt.

Das erfindungsgemäße Verfahren zur Herstellung von Zahnersatz (dentalen Formteilen) zeichnet sich dadurch aus, dass aus dem beschriebenen Rohling mit den Vorformlingen das dentale Formteil, welches durch den Vorformling vorgegeben ist, herausgearbeitet wird, insbesondere durch mechanische Bearbeitung, wie Schneiden, Sägen, Schleifen, Bohren und/oder insbesondere Fräsen.

Es ist bevorzugt, dass bei dem Verfahren
(a) aus Rohlingen aus unterschiedlichen Werkstoffen dentale Formteile aus unterschiedlichen Werkstoffen gefertigt werden, und
(b) die dentalen Formteile aus unterschiedlichen Werkstoffen aneinander gefügt werden, um mehrteiligen Zahnersatz herzustellen.

Bei den dentalen Formteilen aus unterschiedlichen Werkstoffen handelt es sich insbesondere um Gerüste für Zahnersatz und Verblendungen für die Gerüste. Die Gerüste sind vorzugsweise aus Oxidkeramik, Metall oder Metalllegierung gefertigt. Die Verblendungen sind vorzugsweise aus Glaskeramik oder Kompositmaterial gefertigt.

Die dentalen Formteile aus unterschiedlichenWerkstoffen werden insbesondere mit Hilfe eines Glaslots, eines Dentalzements oder eines Adhäsivs aneinandergefügt.

Auf diese Weise können aus Rohlingen aus unterschiedlichen Werkstoffen mehrteilige Dentalrestaurationen, wie Gerüste mit Verblendung, in einfacher Weise hergestellt werden.

Die Erfindung betrifft schließlich auch die Verwendung des erfindungsgemäßen Rohlings zur Herstellung von Zahnersatz.

Weitere Merkmale der Erfindung ergeben sich aus dem nachfolgenden Beispiel in Verbindung mit den Zeichnungen und den Unteransprüchen. Hierbei können die einzelnen Merkmale jeweils für sich alleine oder zu mehreren in Kombination miteinander bei einer Ausführungsform der Erfindung verwirklicht sein.

In den Zeichnungen zeigen:

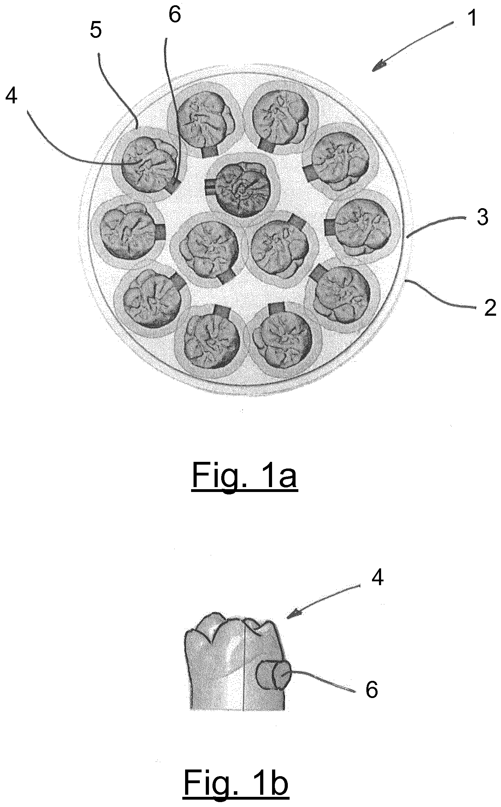

- Fig. 1a: die schematische Darstellung eines erfindungsgemäßen Rohlings mit 13 Vorformlingen in Draufsicht, und
- Fig. 1b: die schematische Darstellung eines Vorformlings im Rohling gemäß Fig. 1a.

Der erfindungsgemäße Rohling 1 nach Fig. 1a besitzt die Form einer Scheibe 2, die an ihrem Außenumfang eine umlaufende Nut 3 aufweist. Diese Nut 3 dient zur Festlegung und Halterung des Rohlings 1 in einer Bearbeitungsmaschine bei der Herstellung dentaler Formteile aus diesem Rohling.

Fig. 1a zeigt in Draufsicht, dass der Rohling 1 insgesamt dreizehn Vorformlinge 4 für Einzelkronen aufweist. Von diesen dreizehn Vorformlingen sind zehn Stück in einem äußeren Ring im Rohling 1 vorgesehen. Im mittleren Teil des Rohlings 1 befinden sich drei weitere Vorformlinge 4.

Alle Vorformlinge 4 sind aus dem Vollmaterial der Scheibe 2 herausgearbeitet, wobei die mit dem Bezugszeichen 5 versehene Umfangslinie als Bearbeitungsrand jeweils den Teil der Scheibe 2 begrenzt, der für den jeweiligen Vorformling 4 bearbeitet wurde.

Der jeweilige Vorformling 4 ist mit dem verbliebenen Restmaterial der Scheibe 2 über einen Steg 6 verbunden, der gemäß Fig. 1a eine kreisförmige Querschnittsfläche besitzt. Dementsprechend befindet sich zwischen dem Außenumfang des Vorformlings 4 und dem Bearbeitungsrand 5 des entsprechenden Vorformlings 4 kein Material der Scheibe 2 mehr. Der Vorformling 4 ist mit dem Restmaterial der Scheibe ausschließlich über den Steg 6 verbunden.

Fig. 1b zeigt einen einzelnen Vorformling 4 mit Steg 6, der zur Verdeutlichung der Erfindung aus dem Rohling 1 bzw. der Scheibe 2 gemäß Fig. 1a herausgelöst ist.

Fig. 1b offenbart deutlich die Kontur einer Einzelkrone für den Vorformling 4. Dementsprechend muss nur noch ein vergleichsweise geringes Volumen des Vorformlings 4 bearbeitet werden, um zum endgültigen dentalen Formteil, hier der Einzelkrone, zu gelangen. Die endgültige Form der Krone wird aus dem Vorformling 4 nach den im Bearbeitungswerkzeug gespeicherten Daten der gewünschten Kronenform ausgearbeitet. Dann kann diese Krone durch Trennung des Stegs 6 aus dem Rohling 1 herausgelöst werden.

### Beispiel

Zunächst wird ein scheibenförmiger Rohling aus Oxidkeramik (3Y-TZB) bereit gestellt. Es handelt sich dabei um eine kreisrunde Scheibe mit einem Durchmesser von 98 mm und einer Dicke (Höhe) von 10 mm. Das Keramikmaterial ist vorgesintert.

Aus diesem Rohling werden mit Hilfe einer CAD/CAM-Frässtation dreizehn Vorformlinge für Einzelkronen herausgearbeitet, wie dies in Fig. 1a dargestellt ist. Auf diese Weise ist die erleichterte Herstellung von dreizehn Einzelkronen aus diesen Vorformlingen (preforms) möglich.

Anschließend kann aus jedem Vorformling eine individuelle Einzelkrone nach entsprechenden Vorgaben hergestellt werden. Dies erfolgt ebenfalls durch Bearbeitung in einer Frässtation, wobei die Daten für die entsprechende Krone aus dem Abdruck der Mundsituation des Patienten unter Berücksichtigung des Sinterschwunds berechnet werden.

Nach der Herstellung der Krone wird diese, ggf. nach einer Feinbearbeitung, dichtgesintert.

## Patentansprüche

1. Rohling für die Herstellung von dentalen Formteilen, wie Kronen, Brücken, Verblendungen, Abutments, wobei der Rohling (1) bereits eine Mehrzahl von Vorformlingen (4) dentaler Formteile aufweist, welche für die Herstellung dieser Formteile zur Verfügung stehen, und der jeweilige Vorformling (4) durch nur einen Steg mit dem Rest des Rohlings verbunden ist und wobei der Rohling die Form einer im Wesentlichen kreisrunden Scheibe (2) mit einem Durchmesser von mehr als 20 mm aufweist und am Außenumfang des Rohlings mindestens ein Haltemittel (3) zum Einspannen des Rohlings (1) bei der Herstellung des dentalen Formteils aufweist, das direkt am Rohling angeformt oder ausgeformt ist.

2. Rohling nach Anspruch 1, bei dem die Vorformlinge durch mechanische Bearbeitung bereitgestellt sind, vorzugsweise durch Schneiden, Sägen, Schleifen, Bohren und/oder insbesondere durch Fräsen.

3. Rohling nach Anspruch 1 oder Anspruch 2, wobei es sich bei den Vorformlingen (4) um Vorformlinge für Einzelkronen handelt.

4. Rohling nach einem der vorhergehenden Ansprüche, der mehr als fünf und insbesondere mehr als 10 Vorformlinge (4) aufweist.

5. Rohling nach einem der vorhergehenden Ansprüche, der die Form einer im Wesentlichen kreisrunden Scheibe (2) mit einem Durchmesser von mehr als 50 mm und bevorzugt mehr als 80 mm aufweist.

6. Rohling nach einem der vorhergehenden Ansprüche, bei dem die Dicke der Scheibe (2) mehr als 5 mm, vorzugsweise zwischen 5 mm und 30 mm, beträgt.

7. Rohling nach einem der vorhergehenden Ansprüche, der aus einem Kunststoff besteht, wobei es sich bei dem Kunststoff vorzugsweise um PMMA (Polymethylmethacrylat) oder PU (Polyurethan)handelt.

8. Rohling nach Anspruch 7, bei dem das Kunststoffmaterial ein Kompositmaterial ist, welches zumindest teilweise polymerisiertes organisches Bindemittel und Füllstoff enthält.

9. Rohling nach Anspruch 8, bei dem das organische Bindemittel mindestens ein monofunktionelles oder multifunktionelles (Meth)acrylat ist.

10. Rohling nach Anspruch 8 oder 9, bei dem das Kompositmaterial mindestens 50 Gew.-% und bevorzugt 50 bis 90 Gew.-% Füllstoff enthält.

11. Rohling nach einem der Ansprüche 1 bis 6, der aus einem Metall oder einer Metalllegierung besteht, wobei es sich bei dem Metall oder der Metalllegierung vorzugsweise um (Rein-)Titan, eine Titanlegierung oder eine Cobalt-Chrom (CoCr-)Legierung handelt.

12. Rohling nach einem der Ansprüche 1 bis 6, der aus einer ungesinterten oder angesinterten Keramik, insbesondere einer Oxidkeramik, besteht, wobei es sich vorzugsweise um eine mit Yttriumoxid stabilisierte Zirkoniumoxid-Keramik handelt.

13. Rohling nach einem der Ansprüche 1 bis 6, der aus einer dichtgesinterten Keramik, insbesondere Oxidkeramik, besteht, wobei es sich bei der Oxidkeramik insbesondere um eine mit Yttriumoxid stabilisierte Zirkoniumoxid-Keramik handelt.

14. Verfahren zur Herstellung des Rohlings nach einem der vorhergehenden Ansprüche, bei dem, insbesondere durch mechanische Bearbeitung, eine Mehrzahl von Vorformlingen dentaler Formteile ausgebildet werden, wobei diese Vorformlinge dann für die Herstellung dieser Formteile zur Verfügung stehen.

15. Verfahren nach Anspruch 14, bei dem der Rohling durch mechanische Bearbeitung des ausgewählten Werkstoffs und insbesondere durch Spritzgießen oder Extrusion des ausgewählten Werkstoffs hergestellt wird.

16. Verfahren zur Herstellung von Zahnersatz, insbesondere zur Herstellung von dentalen Formteilen, wie Kronen, Brücken, Verblendungen, Abutments, bei dem ein dentales Formteil aus einem Rohling nach einem der Ansprüche 1 bis 13 gefertigt wird, derart, dass dieses Formteil aus einem Vorformling im Rohling herausgearbeitet wird, insbesondere durch mechanische Bearbeitung.

17. Verfahren nach Anspruch 16, bei dem
(a) aus Rohlingen aus unterschiedlichen Werkstoffen dentale Formteile aus unterschiedlichen Werkstoffen gefertigt werden, und
(b) die dentalen Formteile aus unterschiedlichen Werkstoffen aneinander gefügt werden, um mehrteiligen Zahnersatz herzustellen.

18. Verfahren nach Anspruch 17, bei dem die dentalen Formteile aus unterschiedlichen Werkstoffen Gerüste für Zahnersatz und Verblendungen für die Gerüste sind.

19. Verfahren nach Anspruch 18, bei dem die Gerüste aus Oxidkeramik, Metall oder Metalllegierung gefertigt sind.

20. Verfahren nach Anspruch 18 oder 19, bei dem die Verblendungen aus Glaskeramik oder Kompositmaterial gefertigt sind.

21. Verwendung des Rohlings nach einem der Ansprüche 1 bis 13 zur Herstellung von Zahnersatz.

## Claims

1. Blank for producing dental shaped parts, such as crowns, bridges, veneers, abutments, wherein the blank (1) already has a plurality of preforms (4) of dental shaped parts, which preforms are available for producing these shaped parts, and the respective preform (4) is connected to the rest of the blank by only one bar, and wherein the blank has the shape of a substantially circular disk (2) with a diameter of more than 20 mm and has at least one holding means (3) provided on the outer circumference of the blank for clamping the blank (1) during the production of the dental shaped part, which is formed or shaped directly on the blank.

2. Blank according to claim 1, wherein the preforms are prepared by machining, preferably by cutting, sawing, grinding, drilling and/or in particular by milling.

3. Blank according to claim 1 or claim 2, wherein the preforms (4) are preforms for a single crown.

4. Blank according to any one of the preceding claims, wherein the blank (1) has more than five and in particular more than 10 preforms (4).

5. Blank according to any one of the preceding claims, which has the shape of a substantially circular disk (2) with a diameter of more than 50 mm and preferably more than 80 mm.

6. Blank according to any one of the preceding claims, wherein the thickness of the disk (2) is more than 5 mm, preferably between 5 mm and 30 mm.

7. Blank according to any one of the preceding claims, which consists of a plastic, wherein the plastic is preferably PMMA (polymethyl methacrylate) or PU (polyurethane).

8. Blank according to claim 7, wherein the plastic material is a composite material which comprises at least partly polymerized organic binder and filler.

9. Blank according to claim 8, wherein the organic binder is at least one monofunctional or multifunctional (meth)acrylate.

10. Blank according to claim 8 or 9, wherein the composite material comprises at least 50 wt.-% and preferably 50 to 90 wt.-% filler.

11. Blank according to any one of claims 1 to 6, which consists of a metal or a metal alloy, wherein the metal or metal alloy is preferably (pure) titanium, a titanium alloy or a cobalt-chromium (CoCr) alloy.

12. Blank according to any one of claims 1 to 6, which consists of an unsintered or a partially sintered ceramic, in particular an oxide ceramic, which is preferably a zirconium oxide ceramic stabilized with yttrium oxide.

13. Blank according to any one of claims 1 to 6, which consists of a densely-sintered ceramic, in particular oxide ceramic, wherein the oxide ceramic is in particular a zirconium oxide ceramic stabilized with yttrium oxide.

14. Process for producing the blank according to any one of the preceding claims, wherein a plurality of preforms of dental shaped parts are formed in the blank, in particular by machining, which preforms are then available for producing these shaped parts.

15. Process according to claim 14, wherein the blank is produced by machining of the selected material and in particular by injection moulding or extrusion of the selected material.

16. Process for producing dental prostheses, in particular for producing dental shaped parts, such as crowns, bridges, veneers, abutments, wherein a dental shaped part is manufactured from a blank according to any one of claims 1 to 13, such that this shaped part is manufactured from a preform in the blank, in particular by machining.

17. Process according to claim 16, wherein
(a) dental shaped parts made of different materials are manufactured from blanks made of different materials, and
(b) the dental shaped parts made of different materials are joined together in order to produce multi-sectional dental prostheses.

18. Process according to claim 17, wherein the dental shaped parts made of different materials are frameworks for dental prostheses and veneers for the frameworks.

19. Process according to claim 18, wherein the frameworks are manufactured from oxide ceramic, metal or metal alloy.

20. Process according to claim 18 or 19, wherein the veneers are manufactured from glass ceramic or composite material.

21. Use of the blank according to any one of claims 1 to 13 for producing dental prostheses.

## Revendications

1. Ébauche pour la fabrication de pièces moulées dentaires tels que couronnes, bridges, facettes, piliers, l'ébauche (1) comportant déjà une pluralité de préformes (4) de pièces moulées dentaires qui sont disponibles pour la fabrication de ces pièces moulées, et la préforme respective (4) n'étant reliée au reste de l'ébauche que par une barrette, et l'ébauche présentant la forme d'un disque sensiblement circulaire (2) avec un diamètre de plus de 20 mm et présentant, sur la périphérie extérieure de l'ébauche, au moins un moyen de retenue (3) pour serrer l'ébauche (1) lors de la fabrication de la pièce moulée dentaire, lequel est moulé directement sur ou à partir de l'ébauche.

2. Ébauche selon la revendication 1, dans laquelle les préformes sont obtenues par façonnage mécanique, de préférence par découpe, sciage, meulage, perçage et/ou en particulier par fraisage.

3. Ébauche selon la revendication 1 ou la revendication 2, les préformes (4) étant des préformes pour couronnes unitaires.

4. Ébauche selon une des revendications précédentes, laquelle comporte plus de cinq, en particulier plus de 10 préformes (4).

5. Ébauche selon une des revendications précédentes, laquelle présente la forme d'un disque circulaire (2) avec un diamètre de plus de 50 mm et, de préférence, de plus de 80 mm.

6. Ébauche selon une des revendications précédentes, dans laquelle l'épaisseur du disque (2) est de plus de 5 mm, de préférence entre 5 mm et 30 mm.

7. Ébauche selon une des revendications précédentes, laquelle est constituée de matière synthétique, la matière synthétique étant de préférence du PMMA (polyméthacrylate de méthyle) ou du PU (polyuréthane).

8. Ébauche selon la revendication 7, dans laquelle la matière synthétique est une matière composite qui contient un liant organique au moins en partie polymérisé et de la matière de charge.

9. Ébauche selon la revendication 8, dans laquelle le liant organique est au moins un (méth)acrylate monofonctionnel ou multifonctionnel.

10. Ébauche selon la revendication 8 ou 9, dans laquelle la matière composite contient au moins 50 % en poids et, de préférence, de 50 à 90 % en poids de matière de charge.

11. Ébauche selon une des revendications 1 à 6, laquelle est constituée d'un métal ou d'un alliage métallique, le métal ou l'alliage métallique étant constitué de préférence de titane (pur), d'un alliage de titane ou d'un alliage cobalt-chrome (CoCr).

12. Ébauche selon une des revendications 1 à 6, laquelle est constituée d'une céramique non frittée ou partiellement frittée, en particulier d'une céramique oxydée constituée de préférence d'une céramique en oxyde de zirconium stabilisée avec de l'oxyde d'yttrium.

13. Ébauche selon une des revendications 1 à 6, laquelle est constituée d'une céramique, en particulier d'une céramique oxydée, frittée à densité maximale, la céramique oxydée étant en particulier une céramique en oxyde de zirconium stabilisée avec de l'oxyde d'yttrium.

14. Procédé de fabrication d'une ébauche selon une des revendications précédentes, dans lequel sont réalisées, en particulier par façonnage mécanique, une pluralité de préformes de pièces moulées dentaires, ces préformes étant ensuite disponibles pour la fabrication de ces pièces moulées.

15. Procédé selon la revendication 14, dans lequel l'ébauche est fabriquée par façonnage mécanique d'un matériau sélectionné et, en particulier, par moulage par injection ou par extrusion du matériau sélectionné.

16. Procédé pour la fabrication d'une prothèse dentaire, en particulier pour la fabrication de pièces moulées dentaires tels que couronnes, bridges, facettes, piliers, dans lequel la pièce moulée dentaire est fabriquée à partir d'une ébauche selon une des revendications 1 à 13, de façon que cette pièce moulée soit façonnée à partir d'une préforme dans l'ébauche, en particulier par façonnage mécanique.

17. Procédé selon la revendication 16, dans lequel
(a) à partir d'ébauches en matériaux différents sont fabriquées des pièces moulées dentaires en matériaux différents, et
(b) les pièces moulées dentaires en matériaux différents sont assemblées entre elles pour réaliser une prothèse dentaire composée.

18. Procédé selon la revendication 17, dans lequel les pièces moulées dentaires en matériaux différents sont des armatures pour prothèse dentaire et des facettes pour les armatures.

19. Procédé selon la revendication 18, **caractérisé en ce que** les armatures sont fabriquées en céramique oxydée, en métal ou en alliage métallique.

20. Procédé selon la revendication 18 ou 19, dans lequel les facettes sont fabriquées en vitrocéramique ou en matière composite.

21. Utilisation de l'ébauche selon une des revendications 1 à 13 pour fabriquer une prothèse dentaire.
